# FASCICULE DE BREVET EUROPEEN

(11) **EP 1 969 311 B1**
(45) Date de publication et mention de la délivrance du brevet: **17.03.2010**
(21) Numéro de dépôt: 06830552.3
(22) Date de dépôt: 12.12.2006
(51) Int. Cl.: G01B 11/30, E01C 23/01, G01C 7/04

(54) **PROCEDE DE MESURE DU PROFIL EN TROIS DIMENSIONS D'UN SOL ET DISPOSITIF POUR SA MISE EN OEUVRE**
VERFAHREN ZUR MESSUNG DES DREIDIMENSIONALEN PROFILS EINES BODENS UND EINRICHTUNG ZUM IMPLEMENTIEREN DES VERFAHRENS
METHOD OF MEASURING THE THREE-DIMENSIONAL PROFILE OF A GROUND, AND DEVICE FOR IMPLEMENTING SAID METHOD

(30) Priorité: 23.12.2005 FR 0513390
(43) Date de publication de la demande: 17.09.2008
(73) Titulaire: Societe de Technologie Michelin, 63000 Clermont-Ferrand (FR); Michelin Recherche et Technique S.A., 1763 Granges-Paccot (CH)
(72) Inventeur: MUHLHOFF, Olivier, F-63000 Clermont-Ferrand (FR); CHABRY, Marc, F-63000 Clermont-Ferrand (FR)
(74) Mandataire: Le Cam, Stéphane Georges Elie
(86) Numéro de dépôt international: PCT/EP2006/069604
(87) Numéro de publication internationale: WO 2007/071595

(56) Documents cités:
- SE-L- 0 400 823
- US-A- 4 700 223
- US-A- 5 790 243
- US-A1- 2002 176 608
- US-A1- 2003 000 097
- PATENT ABSTRACTS OF JAPAN vol. 2003, no. 02, 5 février 2003 (2003-02-05) -& JP 2002 303514 A (SUMITOMO RUBBER IND LTD), 18 octobre 2002 (2002-10-18)

## Description

L'invention est relative à un procédé de mesure du profil en trois dimensions d'un sol sur lequel peuvent circuler des véhicules.

Bien que non limitée à de telles applications, l'invention sera plus spécifiquement présentée en référence à des pneumatiques équipant des véhicules de type automobile.

Lors de roulage de tels véhicules sur routes ou bien sur pistes, le plus souvent constituées d'un revêtement de type asphalte ou béton, les propriétés d'adhérence des pneumatiques équipant ledit véhicule sont fondamentales pour ce qui concerne la transmission des couples accélérateurs et freineurs ainsi que pour ce qui est de la tenue du véhicule. Par tenue du véhicule, on entend notamment le guidage ou maintien de la trajectoire du véhicule.

L'adhérence des pneumatiques sur le revêtement, constitué par exemple d'une couche d'asphalte est pour l'essentiel le résultat d'un phénomène d'indentation de la masse caoutchouteuse de la bande de roulement d'un pneumatique par glissement de celle-ci sur les aspérités de ladite couche d'asphalte qui viennent s'enfoncer superficiellement dans la dite masse caoutchouteuse. En effet, ce phénomène d'indentation par glissement associé aux propriétés hystérétiques de la masse caoutchouteuse qui se déforme crée des forces, opposées au glissement, entre le pneumatique et le revêtement qui se traduisent par l'adhérence du pneumatique sur ledit revêtement.

Il apparaît clairement au vu de ces phénomènes d'adhérence que l'aspect de la surface du sol sur lequel circule ledit véhicule va jouer un rôle important pour les valeurs d'adhérence. Il est en outre connu de l'homme du métier que la rugosité du sol
ou encore la dimension des aspérités dudit sol a un effet sur les valeurs d'adhérence de part la taille des granulats constituant ledit sol ainsi que de part l'état de surface desdits granulats. On parle de « macrorugosité » en relation avec la dimension des granulats correspondant à des dimensions de l'ordre du millimètre et de « microrugosité» en ce qui concerne leur état de surface, correspondant à des dimensions de l'ordre du micron.
On parle encore de média-rugosité (ou rugosité intermédiaire) comme étant un aspect des granulats selon une dimension intermédiaire aux deux précédentes et de l'ordre de la dizaine de microns.

Il est donc usuel de chercher à identifier la nature des sols sur lesquels doivent circuler des véhicules pour prendre en compte ces paramètres lors de la conception de pneumatiques. Ce type d'identification prend encore de l'importance lorsqu'il est nécessaire d'analyser le comportement d'un pneumatique en roulage sur un revêtement donné.

Il est ainsi connu des méthodes permettant d'estimer le profil d'un revêtement d'un sol sur lequel circulent des véhicules équipés de pneumatiques. Il est ainsi usuel de chercher à définir soit le profil en terme de macrorugosité notamment en vue d'établir la capacité du sol à évacuer l'eau par temps humide soit le profil à la fois en terme de macrorugosité et microrugosité dès lors que l'on vise à identifier l'adhérence d'un pneumatique sur ledit sol.

Des techniques de mesure sur route sont notamment connues ; elles consistent par exemple à venir prendre une empreinte à l'aide d'un papier carbone ou bien d'un simple papier associé à un dépôt d'encre sur le sol. De telles mesures vont permettre de déterminer la surface de contact d'un pneumatique sur un revêtement donné d'un point de vue macroscopique. De telles mesures sont notamment peu précises et peu reproductibles.

D'autres techniques de mesure connues consistent à effectuer un prélèvement du revêtement par exemple par carottage pour ensuite effectuer des mesures en laboratoire. Les mesures effectuées peuvent alors être très précises y compris pour des mesures de l'ordre du micron. De telles méthodes présentent l'inconvénient d'être destructive puisqu'elles nécessitent des prélèvements. De telles analyses de la surface d'un sol étant avantageusement réalisées en plusieurs endroits choisis aléatoirement pour obtenir une représentation statistique dudit sol, il est clair que de telles méthodes destructives sont peu intéressantes du fait des dommages qu'elles causent.

Des techniques de mesure intermédiaires entre celles déjà décrites consistent à venir prendre une empreinte par moulage d'un revêtement pour ensuite effectuer une analyse dudit moulage ou bien d'un contre moulage en laboratoire. Le moulage peut par exemple être réalisé à l'aide d'un matériau du type pâte dentaire. Il s'avère que les matériaux utilisés limitent l'analyse du profil du revêtement aux dimensions macroscopiques, le profil microscopique dudit revêtement disparaissant au cours du moulage.

Il est par ailleurs connu, notamment des documents US 2003/0000097, US 5,790,243, SE 527 952 des procédés de mesure en deux dimensions qui consistent en de multiples mesures pour déterminer un profil macroscopique transversale d'une route et notamment les ornières formées par la circulation de véhicule. La transposition de ces techniques à des échelles inférieures, et notamment de l'ordre du micron comme exposé précédemment, nécessiterait notamment de s'affranchir des phénomènes de dérive dus au temps tels que les phénomènes de dilatation thermique. En effet, l'application de tels procédés pour une résolution de l'ordre du micron nécessiterait un nombre de mesures tel que le temps nécessaire aux mesures serait très long et conduirait à une perte de précision du fait des phénomènes physiques environnementaux qui sur de telles périodes évoluent suffisamment pour créer des variations sur les mesures inacceptables pour la précision requise.

Les inventeurs se sont ainsi donnés pour mission de définir un procédé de mesure du profil d'un sol, de type revêtement routier, qui permet d'effectuer une analyse en trois dimensions de ladite surface sans endommager celle-ci et avec une précision de l'ordre du micron. Un autre objectif est de définir un procédé de mesure fiable et reproductible.

Ces buts ont été atteints selon l'invention par un procédé de mesure du profil en trois dimensions d'un sol sur lequel peuvent circuler des véhicules équipés d'au moins un pneumatique, selon lequel on effectue sur site une première mesure topographique avec une précision d'au moins un millimètre d'une surface élémentaire dudit sol, puis selon lequel on définit les lieux de contact de ladite surface avec la bande de roulement d'un pneumatique donné et selon lequel on effectue sur site au moins une deuxième mesure topographique desdits lieux de contact pour obtenir une représentation selon une résolution de l'ordre du micron de la microrugosité desdits lieux de contact.

La réalisation de mesure sur site signifie qu'un opérateur met en oeuvre le procédé de mesure directement sur le sol, le procédé étant avantageusement non destructif.

Le procédé de mesure du profil en trois dimensions du sol selon l'invention va ainsi conduire à une mesure en trois dimensions des surfaces d'un sol susceptibles d'être en contact avec la bande de roulement d'un pneumatique, telles que les têtes de cailloux.

Les différentes mesures topographiques sont avantageusement des méthodes optiques donc sans contact et n'entraînant aucun risque d'endommagement du revêtement mesuré.

Une surface élémentaire du sol est une partie de la surface du sol dont les dimensions sont déterminées en fonction de la technique de mesure employée et de l'expérience acquise en ce qui concerne l'interface pneumatique sol. En effet, l'homme de l'art déterminera notamment en fonction de l'objet de sa mesure la dimension élémentaire utile qui est représentative d'un sol. De la même façon, il déterminera le nombre de surfaces élémentaires qui doivent faire l'objet de mesures pour permettre d'obtenir une représentation statistique moyenne satisfaisante du sol considéré.

Conformément à l'invention, le procédé de mesure comporte une première étape consistant en la mesure d'un profil d'une surface élémentaire d'un sol avec une précision d'au moins un millimètre. Des techniques de mesure optique pour ce type d'échelle de mesure sont connues de l'homme du métier. Il s'agit par exemple d'une technique par projection de franges. Une telle technique met en oeuvre un système de projection de franges et une caméra d'observation, tous deux reliés à un poste informatique. La caméra observe la déformation d'un réseau de franges projeté sur le sol et modulé par son relief. Le réseau déformé est ensuite comparé numériquement à un réseau de référence et le calcul du déphasage existant entre les deux réseaux permet de déterminer la distance de chaque point de mesure de la surface par rapport à la caméra. On peut ainsi déterminer la troisième coordonnée Z d'un point mesuré initialement défini par deux coordonnées X, Y. Il est encore possible pour affiner la mesure de projeter successivement plusieurs réseaux de franges pour chaque point mesuré. Ces mesures peuvent ainsi permettre de numériser la surface élémentaire du sol mesurée avec l'aide d'un algorithme approprié.

Connaissant les caractéristiques du pneumatique considéré que sont notamment sa pression et la sculpture de sa bande de roulement, une deuxième étape consiste à déterminer le lieu des points de contact entre la bande de roulement du pneumatique et la surface élémentaire considérée.

Cette détermination du lieu des points de contact ou de la surface de contact entre le pneumatique et la surface élémentaire du sol est avantageusement obtenue à partir de la surface élémentaire numérisée lors de la première étape. Les lieux de contact avec la bande de roulement sont ainsi avantageusement définis au moyen d'un algorithme de calcul par modélisation de ladite surface élémentaire du sol et en intégrant une ou plusieurs caractéristiques du pneumatique telles que sa pression, le module d'élasticité de la bande de roulement et le type d'entaillement de ladite bande de roulement.

Différentes méthodes de détermination sont alors disponibles.

Selon une première méthode, cette surface peut être déterminée par une approche par éléments finis consistant à définir l'écrasement de la masse caoutchouteuse de la bande de roulement sur le profil du sol, numérisé lors de la première étape. Il s'agit sans doute de la méthode la plus précise mais par ailleurs très longue et de ce fait délicate dans le cadre de mesure que l'on souhaite réaliser sur site.

Selon une deuxième méthode, moins précise mais beaucoup plus rapide, la surface de contact entre le sol et la bande de roulement d'un pneumatique donné est définie par un pourcentage de points émergeants de la surface élémentaire numérisée obtenue lors de la première étape. En effet, les différentes expériences menées montrent qu'une valeur estimée de ces points émergeants à partir de certaines caractéristiques du pneumatique ou d'une estimation de celles-ci et du résultat de la première étape conduit à des résultats satisfaisants. Ainsi pour des véhicules de tourisme en fonction notamment de la sculpture et de la pression du pneumatique, ce pourcentage de points émergeants sera choisi entre 5 et 20%.

Une troisième méthode, également moins précise mais plus rapide que la première consiste à définir la surface de contact entre le sol et la bande de roulement d'un pneumatique donné en considérant une profondeur d'indentation de la masse caoutchouteuse de la bande de roulement du pneumatique sur le relief du sol tel que numérisé lors de la première étape. Ainsi pour des véhicules de tourisme, cette profondeur d'indentation est choisie entre à 0.1 et 0.6 mm.

Lors d'une troisième étape l'invention prévoit une deuxième mesure topographique selon une résolution de l'ordre du micron desdits lieux de contact pour obtenir une représentation de la microrugosité desdits lieux de contact. Des techniques de mesure optique pour ce type d'échelle de mesure sont connues de l'homme du métier. Il s'agit par exemple d'une technique d'interférométrie en lumière blanche qui conduit à une représentation en trois dimensions de la surface mesurée. Une telle technique est basée sur la détection de pics de cohérence créés par deux fronts d'ondes polychromatiques qui interfèrent. La surface d'un lieu de contact est éclairée par une lumière blanche divisée en deux parties à l'aide d'un séparateur de faisceaux. La partie qui n'est pas dirigée vers la surface du lieu de contact est dirigée vers une surface de référence. Les réflexions de chacune de ces parties sont recombinées et la figure d'interférence est enregistrée par une caméra. L'intensité étant maximum quand la différence de marche entre les deux faisceaux est nulle, la surface de référence est translatée et des images sont acquises à intervalles réguliers. L'analyse de l'évolution de l'intensité de chaque point permet de déterminer la coordonnée Z d'un point dont les coordonnées X, Y sont définies. D'autres techniques de mesure en trois dimensions sont par exemple des méthodes par projection de franges, des méthodes de type photogrammétrie (ou stéréovision). Des mesures en deux dimensions avec des outils de type microscope confocal ou triangulation laser pourraient être envisagées ; de telles mesures nécessiteraient des itérations en grand nombre pour accéder à une qualité d'information proche de celle d'une mesure faite en trois dimensions, sous réserve d'une part de résoudre les problèmes de repositionnement des capteurs de mesure, et d'autre part, de maîtriser tous les phénomènes physiques pouvant entraîner une dérive potentielle telle que la dilatation thermique. Dans la pratique, ce type de méthodes de mesure est inapplicable pour obtenir des mesures pertinentes à l'échelle du micron, les problématiques de repositionnement et de phénomènes physiques étant quasi-impossibles à résoudre.

Conformément à l'invention, les résultats de la première mesure de type macroscopique et, plus exactement l'obtention d'une représentation numérique de la surface élémentaire, permet de déterminer les points de contact entre le sol et la bande de roulement où la mesure microscopique selon une résolution de l'ordre du micron est nécessaire. Ces mesures en deux temps conduisent donc à une information plus complète.

Le procédé selon l'invention permet en outre un gain de temps considérable puisque les mesures de la dernière étape sont limitées en surface aux zones utiles par rapport à la surface complète que représente la surface élémentaire.

Pour la mise en oeuvre de la deuxième mesure, du fait de la précision requise de ladite mesure selon une résolution de l'ordre du micron et de la nécessité de changer d'appareillage, il est nécessaire de calibrer le deuxième appareillage par rapport au premier. Ceci peut être mis en oeuvre par tout moyen connu de l'homme du métier, la condition à respecter étant de bien travailler dans le même référentiel durant les deux mesures.

Au regard des techniques de mesure précédemment utilisées, les résultats obtenus et leur précision étaient tout à fait inespérés. En effet, des mesures topographiques avec une précision de l'ordre du micron sont habituellement réalisées en laboratoire, les outils de mesure étant mis en place sur des dalles de béton antisismique. Au vu des résultats, les inventeurs considèrent que les mesures in situ sont réalisables du fait de la nature des revêtements, par exemple de type asphalte ou béton, réalisés pour couvrir les routes, pistes et autres surfaces de roulage sur lesquels circulent des véhicules équipés de pneumatiques. Il semble en effet que la nature de ces matériaux soit tout à fait suffisante pour absorber les vibrations dès lors que les phénomènes à l'origine de ces vibrations, tels que le passage de véhicules, sont distants des zones de mesure de quelques dizaines de mètres.

La mise en oeuvre des mesures est par contre avantageusement réalisée à l'abri des conditions climatiques de sorte que des phénomènes tels que vent, pluie ou soleil ne viennent pas perturber les mesures.

Une variante de l'invention prévoit avantageusement que l'on effectue sur site au moins une troisième mesure pour obtenir une représentation selon une précision de l'ordre de la dizaine de microns, de la média-rugosité desdits lieux de contact.

Des techniques de mesure optique pour ce type d'échelle de mesure sont connues de l'homme du métier. Il s'agit par exemple d'une technique par projection de franges semblable à celle présentée pour la première mesure qui conduit à une représentation en trois dimensions. Comme dans le cas de la deuxième mesure, d'autres techniques de mesure en trois dimensions sont possibles, par exemple des méthodes de type photogrammétrie (ou stéréovision). Des mesures en deux dimensions avec des outils de type microscope confocal ou triangulation laser pourraient également être envisagées ; toutefois la précision de l'ordre de la dizaine de microns de cette mesure conduit aux mêmes réserves que celles faites précédemment dans le cas de la deuxième mesure.

Cette troisième mesure est en fait une mesure intermédiaire en termes de dimensions par rapport aux deux premières mesures précitées. Selon l'invention, la première mesure va ainsi permettre de définir la surface élémentaire par la présence de cailloux et d'intervalles les séparant et ainsi d'atteindre les lieux de contact entre sol et bande de roulement du pneumatique ; la troisième mesure définit la média-rugosité des cailloux et donc leur forme alors que la deuxième mesure permet de connaître la microrugosité selon une résolution de l'ordre du micron desdits cailloux.

Comme dans le cas de la deuxième mesure, la troisième mesure est faite à partir de la numérisation de la surface élémentaire et de la définition de la surface de contact après avoir effectué la première mesure. De la même façon également, la troisième mesure est réalisée dans le référentiel de la première mesure pour bénéficier de la connaissance des lieux de contact et ne mesurer que les zones présentant un intérêt et ainsi effectuer cette troisième mesure aussi rapidement que possible.

Selon un mode de réalisation préféré de l'invention, la surface élémentaire du sol présente une surface d'au moins 5 cm² et avantageusement d'au moins 10 cm². En dessous de cette valeur, les expériences ont montré que les résultats obtenus ne sont pas toujours représentatifs du sol que l'on souhaite mesurer.

De préférence encore selon l'invention, la surface de mesure correspondant à la troisième mesure des lieux de contact est comprise entre 2 mm² et 1cm², et avantageusement entre 4 et 30 mm². Cet intervalle de surface semblable satisfaisant pour obtenir une représentation statistique de la surface élémentaire. Toutefois, il est possible d'effectuer la troisième sur plusieurs lieux de contact afin d'obtenir des résultats statistiques encore plus représentatifs.

De préférence également, selon l'invention, la surface de mesure correspondant à la deuxième mesure des lieux de contact est comprise entre 0.01 et 2 mm² et avantageusement entre 0.04 et 1 mm². Cette plage de mesure est notamment définie par les outils actuellement disponibles pour conduire à un compromis résolution/précision satisfaisant.

Selon un exemple qui ne fait pas partie de l'invention revendiquée, on propose un dispositif de mesure sur site du profil en trois dimensions d'un sol sur lequel peuvent circuler des véhicules équipés d'au moins un pneumatique, ledit dispositif comportant un premier outil de mesure optique avec une précision d'au moins un millimètre et au moins un deuxième outil de mesure optique avec une précision de l'ordre du micron, ledit dispositif comportant en outre au moins un calculateur et comportant encore un moyen de protection contre les conditions climatiques.

Selon une réalisation préférée de cet exemple, le premier outil de mesure est du type par projection de franges.

De préférence encore, le deuxième outil de mesure est du type par interférométrie en lumière blanche.

Selon une variante de cet exemple, le dispositif comporte un troisième outil de mesure optique avec une précision de l'ordre de la dizaine de microns, tel qu'un outil de mesure du type par projection de franges.

Les différents outils de mesure optique sont avantageusement mis en place successivement et pilotés par un même automate lui-même commandé par un calculateur qui pilote les deuxième et troisième outil à partir notamment des mesures effectuées par le premier outil.

Comme évoqué précédemment les inventeurs ont su mettre en évidence contre toute attente que de tels outils, et notamment l'outil de mesure optique avec une précision de l'ordre du micron, peuvent être mis en oeuvre pour effectuer des mesures sur site. Il est en revanche très utile dans la majorité des cas que le dispositif comporte un moyen de protection contre les conditions climatiques telles que la pluie, le vent et le soleil. Il est en effet fondamental que notamment l'outil de mesure optique avec une précision de l'ordre du micron ne soit pas perturbé lors des mesures par les conditions environnementales.

Selon un mode de réalisation avantageux de cet exemple, le moyen de protection contre les conditions climatiques est une toile, telle qu'une tente, hermétiquement close sur sa périphérie et son sommet. Elle est par contre ouverte sur sa base et donc sans fond pour permettre les mesures sur le sol mais hermétiquement liée à celui-ci sur sa périphérie.

Un autre avantage du dispositif du fait des outils nécessaires à sa mise en oeuvre est d'être facilement transportable, notamment au sein d'une voiture qui permet d'accéder simplement à une route ou piste. L'outil peu encombrant présente également l'avantage d'être transportable par avion.

La simplicité d'utilisation du dispositif selon cet exemple permet encore de réaliser des mesures rapides. Cela contribue à la faisabilité de ces mesures directement sur site.

D'autres détails et caractéristiques avantageux de l'invention ressortiront ci-après de la description d'un exemple de mise en oeuvre de l'invention.

Des essais ont été réalisés pour déterminer le profil d'une route dont le revêtement est en asphalte afin d'être en mesure d'interpréter des résultats d'adhérence et d'usure d'un pneumatique d'un véhicule de tourisme plus exactement d'expertiser ces résultats.

Ces essais ont effectivement pour but de venir interpréter des résultats obtenus lors de roulage sur un revêtement donné. Ces essais peuvent permettre de mieux comprendre des phénomènes d'adhérence ou d'usure observés. Ils peuvent par exemple permettre de comprendre ou d'expliquer un fonctionnement d'un pneumatique localement différent de ce qui est habituellement observé. Des mesures réalisées sur un sol peuvent encore permettre d'optimiser la conception d'un pneumatique destiné à rouler sur ce type de sol.

Comme énoncé précédemment l'analyse d'un sol conformément à l' invention se déroule en plusieurs étapes.

Conformément à l'invention, une première étape consiste à identifier les surfaces élémentaires dudit sol sur lesquelles vont porter les mesures. Ces surfaces élémentaires doivent être représentatives des zones les plus importantes en terme d'adhérence et d'usure. L'homme du métier définira ainsi le nombre de surfaces élémentaires, leurs dimensions et leurs emplacements. Il est clair que celui-ci va s'appuyer sur son expérience acquise en ce qui concerne l'interface pneumatique/sol.

Lors de chacune des mesures ou analyses qui va être décrite ci-après, un dispositif telle qu'une tente sans fond est mise en place autour des appareils de mesures pour protéger leur utilisation des conditions climatiques environnantes.

Pour chacune des surfaces élémentaires ainsi définies, on effectue une première analyse à l'aide d'un système de projection de franges associé à une caméra d'observation. Dans le cadre des essais, il s'agit d'un appareil réglé pour faire des mesures sur des surfaces élémentaires égales à 60 cm². Une mesure est effectuée tous les 1/10^{ème} de millimètre pour définir la coordonnée Z d'un point déjà définis par ses coordonnées X, Y afin de parvenir à une topographie de la surface élémentaire analysée avec une précision de l'ordre du millimètre. Le temps d'analyse d'une surface élémentaire a été d'environ 40 secondes.

A partir de ces mesures un calculateur équipé d'un logiciel adapté permet d'obtenir une représentation numérique de la surface élémentaire. Cette surface numérisée en trois dimensions va permettre de définir la surface de contact réelle de la bande de roulement du pneumatique avec ladite surface. Pour définir cette surface de contact réelle et plus exactement les lieux de contact de ladite surface élémentaire avec la bande de roulement d'un pneumatique donné, on considère une indentation de la bande de roulement du pneumatique considéré égale à 0.3 mm. Un traitement numérique de la surface numérisée conduit ainsi à l'ensemble des lieux de contact.

Partant de ces lieux de contact, on effectue une deuxième analyse à l'aide d'un système de projection de franges associé à une caméra d'observation. Dans le cadre des essais, il s'agit d'un deuxième appareil réglé pour faire des mesures sur des surfaces égales à 10 mm². Cet appareil est utilisé pour faire des mesures d'une sélection des lieux de contact. Une mesure est effectuée tous les 2 microns pour définir la coordonnée Z d'un point déjà définis par ses coordonnées X, Y afin de parvenir à une topographie des surfaces analysées, sélectionnées parmi les lieux de contact. Durant les essais, ces deuxièmes mesures ont été effectuées sur environ 20 surfaces sélectionnées parmi les lieux de contact. Les résultats obtenus permettent d'obtenir une topographie
ou profil des surfaces sélectionnées des lieux de contact avec une précision de l'ordre de la dizaine de microns. Le temps d'analyse de chaque surface sélectionnée a été d'environ 20 secondes.

La deuxième analyse est effectuée en tenant compte de la première analyse et de ses mesures notamment pour mettre en place le deuxième outil de mesure et calibrer sa position initiale en fonction de la position des lieux de contact repérés dans un référentiel donné. Ces opérations sont effectuées à l'aide d'un automate lui-même commandé par un calculateur.

Partant toujours des lieux de contact, on effectue une troisième analyse à l'aide d'un système d'interférométrie en lumière blanche. Cet appareil est utilisé pour faire des mesures d'une sélection des lieux de contact sur une surface égale à 0.04 mm². Une mesure est effectuée tous les 0.4 microns pour définir la coordonnée Z d'un point déjà définis par ses coordonnées X, Y afin de parvenir à une topographie des surfaces analysées, sélectionnées parmi les lieux de contact. Durant les essais, ces troisièmes mesures ont été effectuées sur environ 20 surfaces sélectionnées parmi les lieux de contact. Les résultats obtenus permettent d'obtenir une topographie ou profil des surfaces sélectionnées des lieux de contact avec une précision de l'ordre du micron. Le temps d'analyse de chaque surface sélectionnée a été d'environ 10 minutes.

Les opérations d'analyse à l'aide de l'interféromètre sont également effectuées à l' aide du même automate commandé par un calculateur, le pilotage étant opéré notamment à partir des mesures effectuées lors de la première analyse.

La totalité des opérations ci-dessus décrites permettant de caractériser le sol a duré 2 heures.

Les résultats obtenus intégrés dans des outils de modélisation de l'interface pneumatique sol adaptés peuvent permettre de mieux comprendre ou interpréter certains phénomènes d'adhérence et d'usure des pneumatiques en roulage.

L'analyse d'un sol ainsi décrite peut également permettre d'intervenir en amont du développement d'un pneumatique destiné à circuler sur un type de revêtement donné, comme c'est le cas par exemple en compétition sur un circuit.

L'invention a été plus particulièrement décrite en référence à des pneumatiques pour automobiles mais elle s'applique plus généralement à tout type de pneumatiques et notamment les pneumatiques pour motocyclettes, avions, camions, ....
Elle s'applique également plus généralement à tout type de revêtements sur lesquels peuvent rouler ce type de véhicule ; il peut notamment s'agir de revêtements de type asphalte, béton comme précédemment cités, ou bien encore de revêtements de type enrobé drainant, béton bitumineux, sol résine, ....

## Revendications

1. Procédé de mesure du profil en trois dimensions d'un sol sur lequel peuvent circuler des véhicules équipés d'au moins un pneumatique **caractérisé en ce qu'**on effectue sur site une première mesure topographique avec une précision d'au moins un millimètre d'une surface élémentaire dudit sol, **en ce qu'**on définit les lieux de contact de ladite surface avec la bande de roulement d'un pneumatique donné et **en ce qu'**on effectue sur site au moins une deuxième mesure topographique desdits lieux de contact pour obtenir une représentation selon une résolution de l'ordre du micron de la microrugosité desdits lieux de contact.

2. Procédé de mesure selon la revendication 1, **caractérisé en ce que** les lieux de contact avec la bande de roulement sont définis au moyen d'un algorithme de calcul par modélisation de ladite surface élémentaire du sol et en intégrant des caractéristiques du pneumatique telles que sa pression, le module d'élasticité de la bande de roulement et le type d'entaillement de ladite bande de roulement.

3. Procédé de mesure selon la revendication 1 ou 2, **caractérisé en ce qu'**on effectue sur site au moins une troisième mesure pour obtenir une représentation en trois dimensions, selon une résolution de l'ordre de la dizaine de microns, de la média-rugosité desdits lieux de contact.

4. Procédé de mesure selon l'une des revendications précédentes **caractérisé en ce que** la surface élémentaire du sol présente une surface d'au moins 5 cm².

5. Procédé de mesure selon la revendication 3, **caractérisé en ce que** la surface de mesure correspondant à la troisième mesure des lieux de contact est comprise entre 2 mm² et 1cm².

6. Procédé de mesure selon l'une des revendications précédentes, **caractérisé en ce que** la surface de mesure correspondant à la deuxième mesure des lieux de contact est comprise entre 0.01 et 2 mm².

## Claims

1. Method of measuring, in three dimensions, the profile of a pavement on which vehicles fitted with at least one tire can run, **characterized in that** a first topographical measurement is carried out on site with a precision of at least one millimeter of an elementary surface of said pavement, **in that** the points of contact between said surface and the tread of a given tire are defined and **in that** at least a second topographical measurement of said points of contact is carried out on site so as to obtain a representation, with a resolution of the order of one micron, of the microroughness of said points of contact.

2. Measurement method according to Claim 1, **characterized in that** the points of contact with the tread are defined by means of a calculation algorithm for modeling said elementary surface of the pavement and by integrating into it characteristics of the tire, such as its pressure, the elastic modulus of the tread and the type of grooving of said tread.

3. Measurement method according to Claim 1 or 2, **characterized in that** at least a third measurement is carried out on site so as to obtain a three-dimensional representation, with a resolution of the order of ten microns or so, of the medio-roughness of said points of contact.

4. Measurement method according to one of the preceding claims, **characterized in that** the elementary surface of the pavement has an area of at least 5 cm².

5. Measurement method according to Claim 3, **characterized in that** the measurement area corresponding to the third measurement of the points of contact is between 2 mm² and 1 cm².

6. Measurement method according to one of the preceding claims, **characterized in that** the measurement area corresponding to the second measurement of the points of contact is between 0.01 and 2 mm².

## Patentansprüche

1. Verfahren zur Messung des dreidimensionalen Profils eines Bodens, auf dem Fahrzeuge fahren können, die mit mindestens einem Luftreifen ausgestattet sind, **dadurch gekennzeichnet, dass** vor Ort eine erste topographische Messung einer elementaren Fläche des Bodens mit einer Genauigkeit von mindestens einem Millimeter durchgeführt wird, dass die Kontaktstellen der Fläche mit dem Laufstreifen eines gegebenen Luftreifens definiert werden, und dass vor Ort mindestens eine zweite topographische Messung der Kontaktstellen durchgeführt wird, um eine Darstellung der Mikrorauigkeit der Kontaktstellen gemäß einer Auflösung in der Größenordnung eines Mikrons zu erhalten.

2. Messverfahren nach Anspruch 1, **dadurch gekennzeichnet, dass** die Kontaktstellen mit dem Laufstreifen mittels eines Rechenalgorithmus durch Modellierung der elementaren Fläche des Bodens und durch Integration von Merkmalen des Luftreifens wie sein Druck, der Elastizitätsmodul des Laufstreifens und der Einkerbungstyp des Laufstreifens definiert werden.

3. Messverfahren nach Anspruch 1 oder 2, **dadurch gekennzeichnet, dass** vor Ort mindestens eine dritte Messung durchgeführt wird, um eine dreidimensionale Darstellung der Zwischen-Rauigkeit der Kontaktstellen gemäß einer Auflösung in der Größenordnung von Zehntelmikrons zu erhalten.

4. Messverfahren nach einem der vorhergehenden Ansprüche, **dadurch gekennzeichnet, dass** die elementare Fläche des Bodens eine Fläche von mindestens 5 cm² hat.

5. Messverfahren nach Anspruch 3, **dadurch gekennzeichnet, dass** die der dritten Messung der Kontaktstellen entsprechende Messfläche zwischen 2 mm² und 1 cm² liegt.

6. Messverfahren nach einem der vorhergehenden Ansprüche, **dadurch gekennzeichnet, dass** die der zweiten Messung der Kontaktstellen entsprechende Messfläche zwischen 0,01 und 2 mm² liegt.
